# EUROPEAN PATENT APPLICATION

(11) **EP 4 700 441 A1**
(43) Date of publication of application: **25.02.2026**
(21) Application number: 24792768.4
(22) Date of filing: 19.04.2024
(51) Int. Cl.: G01T 1/167, G01N 23/02, G01N 30/74, G01N 30/88, G01T 1/20, G01T 1/22

(54) **RADIOACTIVE SUBSTANCE DETECTION DEVICE**

(30) Priority: 19.04.2023 JP 2023068169; 10.05.2023 JP 2023078147
(71) Applicant: National University Corporation Chiba University, Chiba-shi, Chiba 263-8522 (JP); NEO-P TECHNOLOGY, LLC., Ichihara-shi, Chiba 290-0073 (JP)
(72) Inventor: UEHARA Tomoya, Chiba-shi Chiba 2608675 (JP); SUZUKI Hiroyuki, Chiba-shi Chiba 2608675 (JP); KANNAKA Kento, Chiba-shi Chiba 2608675 (JP); IWAI Makoto, Ichihara-shi Chiba 2900073 (JP)
(74) Representative: Hoffmann Eitle
(86) International application number: PCT/JP2024/015621
(87) International publication number: WO 2024/219497

(57) **Abstract**

The present invention addresses the problem of providing a safe, easy-to-handle, highly sensitive radioactive substance detection device as well as a radioactive substance detection device and method capable of detecting an α-emitting analyte directly, simply, and inexpensively. The following is provided, as a solution, [1] a radioactive substance detection device including a capillary for retaining a radioactive substance and a solvent inside the capillary, and a light detecting means, wherein the light detecting means is configured to detect Cherenkov light-containing light generated when radiation emitted from the radioactive substance penetrates the solvent and/or a tube wall of the capillary; and [2] a radioactive substance detection device including a light detecting means, wherein the radioactive substance contains at least one α-emitting nuclide, and the light detecting means is configured to detect light generated when an α- ray emitted from the radioactive substance comes into contact with at least one selected from the group consisting of glass, fluorescent indicator F₂₅₄, and fluorescent indicator F_{254S}.

## Description

### Technical Field

The present invention relates to a radioactive substance detection device, a radioactive compound synthesizer, and a radioactive substance detection method.

### Background Art

In the production and R&D of radiopharmaceuticals using positron-emitting nuclide-labeled compounds used for PET diagnosis and β- or α-emitting nuclides used for nuclear medicine therapy, chromatographic analysis has been used to track reactions and evaluate product purity. Examples of this chromatographic analysis include thin-layer chromatography (TLC), which uses a plate with an adsorbent immobilized on a support, and column chromatography, which uses a column filled with a filler in a cylindrical container (e.g., capillary TLC, High Performance Liquid Chromatography (HPLC)). TLC and capillary TLC have the feature of analyzing the total radioactivity sampled, while HPLC analyzes only the components eluted from the column and cannot analyze the total injected radioactivity. Therefore, TLC and capillary TLC are superior to HPLC in analytical performance such as purity evaluation.

Radionuclide-labeled compounds separated by TLC are analyzed by radiation or light detection. PTL 1 discloses that after α-emitting nuclides are separated by TLC, the TLC is covered with an α-ray scintillator, so that the converted visible light can be analyzed by a high-resolution camera.

NPL 1 discloses that after TLC analysis of charged particle (β-/+ ray)-emitting nuclides, Cherenkov light emitted by the interaction between β-/+ ray and a material can be detected by a high-resolution camera. However, its detection sensitivity is lower than that of radiation detectors.

In addition, since α-particles have a very short range, it is difficult to detect them directly as α-radiation. As methods for detecting α-emitting nuclides and α-emitting nuclide-labeled compounds, there are known methods including a method of detecting light generated by bringing a target substance into contact with a liquid or solid scintillator, and a method of detecting detectable radiation emitted from subsequent decays following α-decay.

PTL 2 discloses a silver-activated zinc sulfide (ZnS:Ag) phosphor that converts α-radiation into light, and describes that fluorescence in the range of 320 to 580 nm is emitted by contact between the phosphor powder and α-radiation.

NPL 2 describes on employing a method in which γ-rays and X-rays emitted together with decay are detected by a semiconductor detector using high-purity germanium, and a chemical is synthesized by indirectly evaluating the target substance by this method.

### Citation List

### Patent Literature

PTL 1: JP 2021-21567 A
PTL 2: JP 2015-174974 A

### Non Patent Literature

NPL 1: J. Wong et al., Nucl. Med. Biol., 82-83, 41-48,2020
NPL 2: T. Watabe et al., J. Nucl. Med., 61, 563-569, 2020

### Summary of Invention

### Technical Problem

In the analysis of compounds labeled with radionuclides developed on TLC, radiation detectors have high sensitivity and are currently the most widely used. However, because of their high sensitivity, they are susceptible to the influence of surrounding radioactivity and must be installed in locations with low background. Usually, the detector is installed in an analysis room, etc., and the operator needs to transfer the deployed TLC. Therefore, there are concerns about radioactive contamination of the surrounding environment and radiation exposure of workers during transfer, and improvements in safety are thus required.

In addition, radiation detectors require a collimator or other device to align the direction of radiation in front of the detector. Since collimators are radiation shielding devices, they are made of lead, tungsten, etc., and their mass is very large, so they are not always easy to handle.

On the other hand, optical analysis using Cherenkov light has the advantage that the light generated by the interaction between short range β-/+ rays and silica gel can be used for analysis without being affected by surrounding radioactivity. Unlike a radiation detector, it does not require a collimator and has a small mass. However, in the detection of light from TLC, the Cherenkov light generated is very weak due to the fact that only a thin layer of silica gel is used as the interacting material, and the sensitivity is insufficient, resulting in poor analytical performance.

The first object of the present invention is to provide a safe, easy-to-handle, highly sensitive radioactive substance detection device as well as a radioactive substance synthesizer and a radioactive substance detection method, which device and method can solve the above problem.

In addition, in the method of detecting light generated by bringing a target substance into contact with a liquid or solid scintillator, the target substance and the scintillator are in a contaminated state. Thus, it may be difficult to isolate the target substance as a pure substance after detection, and in many cases the scintillator is also expensive. The method of detecting detectable radiation emitted from subsequent decays following α-decay results in an indirect evaluation. Since the target substance changes depending on the measurement time, quantitative evaluation may be difficult.

Therefore, there is a need for a simple and inexpensive technology to directly detect the α-emitting target substance itself.

The second object of the present invention is to provide a radioactive substance detection device and method that can be used to directly, simply, and inexpensively detect an α-emitting target substance, which device and method can solve the above problem.

### Solution to Problem

The first aspect of the present invention encompasses the following items [1] to [11].
[1] A radioactive substance detection device including:
   a capillary for retaining a radioactive substance and a solvent inside the capillary; and
   a light detecting means, wherein
   the light detecting means is configured to detect Cherenkov light-containing light generated when radiation emitted from the radioactive substance penetrates the solvent and/or a tube wall of the capillary.
[2] The detection device according to [1], wherein a material constituting the capillary is selected from the group consisting of glass, polypropylene, polyethylene, polystyrene, and polyvinyltoluene.
[3] The detection device according to [1] or [2], wherein the radioactive substance includes at least one nuclide that emits a charged particle beam due to β-decay.
[4] The detection device according to [3], wherein the nuclide is at least one selected from the group consisting of ¹¹C, ¹³N, ¹⁵O, ¹⁸F, ³²P, ⁶⁴Cu, ⁶⁸Ga, ⁸⁹Zr, ⁹⁰Y, ¹²⁴I, ¹³¹I, ¹⁷⁷Lu, ²⁰⁹Ti, ²⁰⁹Pb, and ²¹³Bi.
[5] The detection device according to any one of [1] to [4], further including a means for converting a wavelength of the Cherenkov light.
[6] The detection device according to any one of [1] to [5], wherein the light detecting means further detects scintillation light of the radioactive substance.
[7] The detection device according to any one of [1] to [6], wherein at least part of the capillary is filled with a stationary phase, the device including a sample separating means configured such that a sample containing the radioactive substance and a mobile phase containing a solvent move through the stationary phase to separate the sample.
[8] The detection device according to [7], wherein radiation emitted from the radioactive substance causes Cherenkov light to be generated when the radiation penetrates the stationary phase.
[9] The detection device according to [7] or [8], wherein the stationary phase is selected from the group consisting of silica gel, surface-treated silica gel, ion exchange resins, porous crosslinked gel, and carriers having an affinity moiety to an analyte.
[10] A radioactive compound synthesizer including:
   a radioactive compound synthesizing means;
   a sample separating means including a capillary filled with a stationary phase; and
   a light detecting means, wherein
   the sample separating means is configured such that a sample and a solvent-containing mobile phase move through the stationary phase to separate the sample,
   the sample includes at least a portion of the radioactive compound synthesized by the synthesizing means, and
   the light detecting means is configured to detect Cherenkov light-containing light originating from radiation emitted from the radioactive compound.
[11] A radioactive substance detection method including the steps of:
   retaining a radioactive substance and a solvent inside a capillary; and
   detecting Cherenkov light-containing light generated when radiation emitted from the radioactive substance penetrates the solvent and/or a tube wall of the capillary.

The second aspect of the present invention encompasses the following items [12] to [17].

[12] A radioactive substance detection device including a light detecting means, wherein
the radioactive substance contains at least one α-emitting nuclide, and
the light detecting means is configured to detect light generated when an α-ray emitted from the radioactive substance comes into contact with at least one selected from the group consisting of glass, fluorescent indicator F₂₅₄, and fluorescent indicator F_{254S}.

[13] The detection device according to [12], wherein the α-emitting nuclide is at least one selected from the group consisting of ¹⁴⁹Tb, ²¹¹At, ²¹²Bi, ²¹²Pb, ²¹³Bi, ²²³Ra, ²²⁴Ra, ²²⁵Ac, ²²⁶Th, ²²⁷Th, and ²³⁰U.

[14] The detection device according to [12] or [13], further including a glass capillary configured to allow a sample containing the radioactive substance to move, with a solvent, through the capillary, wherein
the light detecting means is configured to detect light containing light generated when an α-ray emitted from the radioactive substance comes into contact with the glass capillary.

[15] The detection device according to any one of [12] to [14], further including a capillary configured to allow a sample containing the radioactive substance to move, with a solvent, through the capillary, wherein
at least part of the capillary is filled with a stationary phase containing at least one selected from the group consisting of glass, fluorescent indicator F₂₅₄, and fluorescent indicator F_{254S}, and
the light detecting means is configured to detect light generated when an α-ray emitted from the radioactive substance comes into contact with at least one of the glass, fluorescent indicator F₂₅₄, and fluorescent indicator F_{254S}.

[16] The detection device according to [14] or [15], wherein the radioactive substance further includes at least one nuclide that emits a charged particle beam due to β-decay, and the device is configured to further detect Cherenkov light-containing light generated when radiation emitted from the nuclide that emits a charged particle beam due to the β-decay penetrates either the solvent, the stationary phase, or a tube wall of the capillary.

[17] A radioactive substance detection method including the step of detecting light generated when an α-ray emitted from a radioactive substance comes into contact with at least one selected from the group consisting of glass, fluorescent indicator F₂₅₄, and fluorescent indicator F_{254S}.

### Advantageous Effects of Invention

The present invention provides a safe, easy-to-handle, highly sensitive radioactive substance detection device as well as a radioactive substance synthesizer and a radioactive substance detection method.

In addition, the present invention provides a radioactive substance detection device and method that can be used to directly, simply, and inexpensively detect an α-emitting target substance.

### Brief Description of Drawings

[Fig. 1] Fig. 1 shows the results of radionuclide imaging using the TLC of Reference Example 1.
[Fig. 2] Fig. 2 shows the results of radionuclide imaging using the capillary column (CP-C) of Example 1.
[Fig. 3] Fig. 3 shows the results of Example 2.
[Fig. 4] Fig. 4 shows the results of Example 3.
[Fig. 5A] Fig. 5A shows the results of Example 4.
[Fig. 5B] Fig. 5B shows the results of Example 4.
[Fig. 6] Fig. 6 shows the results of Example 5.
[Fig. 7] Fig. 7 shows the results of Example 6.

### Description of Embodiments

The following describes a first embodiment of the present invention.

### [Radioactive substance detection device (I)]

The radioactive substance detection device (I) of the present invention includes
a capillary (I) for retaining a radioactive substance (I) and a solvent (I) inside the capillary, and
a light detecting means (I), wherein
the light detecting means (I) is configured to detect Cherenkov light-containing light generated when radiation emitted from the radioactive substance (I) penetrates the solvent (I) and/or a tube wall of the capillary (I).

In the radioactive substance detection device (I) of the present invention, Cherenkov light can be generated through the interaction between the radioactive substance (I) and the solvent (I) and/or the capillary (I), which makes it possible to capture radiation from all directions (4π direction). This should increase sensitivity.

### <Radioactive substance (I)>

The radioactive substance (I) is an analyte for the detection device (I) of the present invention.

The radioactive substance (I) may be either a single radioactive element or a compound containing a radioactive element. The single radioactive element consists of only one radioactive element, and the compound containing a radioactive element includes a compound consisting of only two or more radioactive elements, a compound consisting of one or more radioactive elements and one or more non-radioactive elements. The radioactive substance (I) may contain two or more radioactive substances, each of which may be either a single radioactive element or a compound containing a radioactive element.

The radioactive substance (I) may be solid, liquid, or gas, as long as it can be retained inside the capillary. The radioactive element constituting the radioactive substance is not particularly limited as long as the Cherenkov effect can be elicited. Specific examples include a nuclide that emits a charged particle beam due to β-decay.

Specific examples of the radioactive element include ¹¹C, ¹³N, ¹⁵O, ¹⁸F, ³²P, ⁶⁴Cu, ⁶⁸Ga, ⁸⁹Zr, ⁹⁰Y, ¹²⁴I, ¹³¹I, ¹⁷⁷Lu, ²⁰⁹Ti, ²⁰⁹Pb, and ²¹³Bi.

Specific examples of the radioactive compound include ¹⁸F-labeled fluorodeoxyglucose ([¹⁸F]FDG), ¹¹C-glucose, and ⁹⁰Y-labeled antibody.

### <Capillary (I)>

The capillary (I) included in the detection device (I) of the present invention can retain a radioactive substance (I) and a solvent (I) inside the capillary.

In a preferred embodiment of the present invention, Cherenkov light is generated when radiation emitted from the radioactive substance (I) penetrates a tube wall of the capillary (I).

The material constituting the tube wall of the capillary (I) is not particularly limited as long as the Cherenkov light-containing light can penetrate therethrough. Preferably, the material is transparent. However, it is not required to be transparent except for the part emitting light toward the light detecting means (I), which may be light-shielded.

Specific examples of the material constituting the capillary include glass, polypropylene, polyethylene, polystyrene, and polyvinyltoluene. Glass is preferred from the viewpoint of high resistance to various solvents including organic solvents. Polyvinyltoluene is preferred because it emits scintillation light and improves sensitivity.

The shape of the capillary (I) is not limited.

The cross-section is, for example, approximately circular or oval. In addition, the diameter of the cross-section is, for example, 1 to 10 mm and preferably 1 to 2 mm.

The wall thickness of the capillary (I) is, for example, 100 to 2000 µm and preferably 200 to 400 µm.

The capillary (I) should have an opening at least one end to allow for introduction and extraction of the radioactive substance (I) and the solvent (I). Both ends may have openings. In this case, it is preferable to have another member, such as a stopper, so that the radioactive substance (I) and solvent (I) can be retained inside.

The capillary (I) may be fixed to the detection device by a jig.

The capillary (I) may exist independently or may be connected to another member configured to introduce and extract the radioactive substance (I) and the solvent (I).

### <Solvent (I)>

The solvent (I) is not particularly limited as long as the liquid can be used to retain the radioactive substance inside the capillary.

In a preferred embodiment of the present invention, Cherenkov light is generated when radiation emitted from the radioactive substance (I) penetrates the solvent (I).

Examples of the solvent (I) include: water-based aqueous medium; lower alcohol such as methanol, ethanol, and isopropyl alcohol; ethers such as diethyl ether and tetrahydrofuran (THF); organic solvents other than the above, such as chloroform, ethyl acetate, hexane, and acetonitrile; and mixtures of respective solvents.

Examples of the aqueous medium include a buffer such as phosphate buffer, citrate buffer, or acetate buffer.

The solvent (I) preferably has a refractive index of more than 1 from the viewpoint of efficiently eliciting the Cherenkov effect.

### <Light detecting means (I)>

The light detecting means (I) included in the detection device (I) of the present invention is configured to detect Cherenkov light-containing light generated when radiation emitted from the radioactive substance (I) penetrates the solvent (I) and/or a tube wall of the capillary (I).

### (Cherenkov light)

Cherenkov light refers to light that is emitted when a high-energy charged particle passes through a transparent medium, whereby the atoms or molecules in the medium are polarized under excitation conditions by the electromagnetic field of the particle and radiation is released upon return to an original stabilized state. The phenomenon in which Cherenkov light is generated is referred to as the Cherenkov effect.
Cherenkov light is generated on the basis of radiation emitted from a radioactive substance and does not require external excitation light

The wavelength of Cherenkov light is generally 200 to 800 nm, and preferably 250 to 400 nm.

In the detection device (I) of the present invention, when radiation emitted from the radioactive substance (I) passes through the solvent (I) and/or the tube wall of the capillary (I), Cherenkov light is generated by the Cherenkov effect.

### <Detecting means (I)>

The light detecting means (I) is not limited as long as it can detect Cherenkov light-containing light.

Examples include charge-coupled device (CCD) cameras, complementary metal oxide semiconductor (CMOS) cameras, photodiodes, photomultiplier tubes, and photographic films. Preferred are CCD or CMOS cameras. Among them, from the viewpoint of sensitivity improvement and noise reduction, more preferred are cooled CCD cameras or cooled CMOS cameras, which are operated at low temperatures. Light may be detected by a CCD or CMOS camera while capturing a visually perceptible image (imaging) or data-processing the value of the electric charge generated in an imaging element.

The detectable wavelength range of the light detecting means (I) is, for example, from 200 to 1000 nm and preferably from 250 to 800 nm.

### <Detection device (I)>

The light detecting means (I) and the capillary (I) included in the detection device (I) of the present invention are configured such that the light detecting means (I) detects Cherenkov light-containing light generated when radiation emitted from the radioactive substance (I) penetrates the solvent (I) and/or a tube wall of the capillary (I).

The positional relationship between the capillary (I) and the detecting means (I) is not particularly limited. From the viewpoint of efficient light detection, for example, they are arranged so that the distance is 50 to 5000 mm and preferably 50 to 4500 mm.

The capillary (I) and the light detecting means (I) are placed in a space where the light from outside is blocked from the viewpoint of efficient light detection. Specifically, the detection device (I) of the present invention may be located in a dark room, or the detection device (I) of the present invention may be equipped with a chamber in which external light can be blocked, and the capillary (I) and the light detecting means (I) may be housed inside the chamber.

### <Means for converting wavelength of Cherenkov light

The radioactive substance detection device (I) of the present invention can further have a means for converting the wavelength of Cherenkov light.

Examples of the means for converting the wavelength of Cherenkov light include fluorescent substances such as anthracene and F₂₅₄ (manganese-containing zinc silicate), which are also called photosensitizers. Examples of the embodiment further including a means for converting the wavelength of Cherenkov light include an embodiment in which a tube wall of the capillary (I) and/or the solvent (I) contains the above fluorescent substance. More specifically, the above fluorescent substance may be kneaded into the tube wall material of the capillary (I), or the above fluorescent substance may be attached or placed inside and/or outside the tube wall of the capillary (I). Examples of another embodiment include an embodiment in which the above fluorescent substance is placed on the Cherenkov light path between the capillary (I) and the light detecting means (I), or an embodiment in which the above fluorescent substance is mixed with a stationary phase to be filled into the capillary (I).

The wavelength of Cherenkov light is mainly in the UV region, with a small portion in the visible to near-infrared region. The means for converting the wavelength of Cherenkov light may be used to shift the wavelength to the longer wavelength side. The wavelength can be fit more to the wavelength bandwidth of the easily available and widely used light detecting means, resulting in improved detection sensitivity.

### <Scintillation light>

The detection device (I) of the present invention may be configured to further detect scintillation light of the radioactive substance (I).

Scintillation light is light that is spontaneously emitted when a material acting as a scintillator absorbs high-energy radiation.

For example, the material of the capillary (I) may be a substance that functions as a scintillator, such as polyvinyltoluene as described above. In this case, the light emitted from the capillary (I) contains scintillation light in addition to Cherenkov light, and the sensitivity can be further improved if the detection device (I) is configured to further detect scintillation light from the radioactive substance (I).

In addition to an action of converting the wavelength of Cherenkov light, fluorescent substances such as anthracene and F₂₅₄ (manganese-containing zinc silicate) mentioned above also function as scintillators. Therefore, when the radioactive substance detection device (I) of the present invention has a fluorescent substance such as anthracene or F₂₅₄ (manganese-containing zinc silicate) as a means for converting the wavelength of Cherenkov light, the light emitted from the capillary (I) includes scintillation light in addition to Cherenkov light.

### <Light collecting means>

The detection device (I) of the present invention may further have a light collecting means.

Examples of the light collecting means include an embodiment in which fine optical fibers are incorporated, and an embodiment in which a mirror is disposed on approximately a half circumference of the capillary (I) (in a direction opposite to the light detecting means). Examples of a specific embodiment of incorporating fine optical fibers include an embodiment in which fine optical fibers are incorporated into a stationary phase filled in the capillary described later.

Cherenkov light and scintillation light are emitted so as to diverge in all directions toward the circumference of the capillary. Accordingly, by means of the light collecting means, the amount of light, including Cherenkov light, directed toward the light detecting means can be increased, and as a result, sensitivity can be improved.

### <Sample separating means>

In the detection device (I) according to a preferred embodiment of the present invention, at least part of the capillary (I) is filled with a stationary phase, the device is configured such that a sample containing the radioactive substance and a mobile phase containing a solvent move through the stationary phase to separate the sample.

The capillary filled with a stationary phase is a sample separating means, and specific example of the embodiment include a capillary column.

Examples of the stationary phase include silica gel, surface-treated silica gel, ion exchange resins, porous crosslinked gel, and carriers having an affinity moiety to an analyte. The analyte means a sample containing the radioactive substance.

In the case of the detection device according to such an embodiment of the present invention, radiation emitted from the radioactive substance causes Cherenkov light to be generated when the radiation penetrates the stationary phase.

Specific embodiments of the sample separating means include capillary TLC. The capillary TLC refers to a column filled with a carrier such as silica gel as a stationary phase inside the capillary. Chromatography by the capillary TLC is possible as for TLC. In addition, by connecting a pump to the capillary TLC, sample filling can be automated and chromatography can be performed quickly.

### [Radioactive compound synthesizer (I)]

The radioactive compound synthesizer of the present invention includes:
a radioactive compound synthesizing means (I);
a sample separating means (I) including a capillary (I) filled with a stationary phase; and
a light detecting means (I), wherein
the sample separating means (I) is configured such that a sample and a solvent (I)-containing mobile phase move through the stationary phase to separate the sample,
the sample includes at least a portion of the radioactive compound (I) synthesized by the synthesizing means, and
the light detecting means (I) is configured to detect Cherenkov light-containing light originating from radiation emitted from the radioactive compound (I).

As the sample separating means including a capillary filled with a stationary phase and the light detecting means (I), those described in "Radioactive substance detection device (I)" may be used.

The radioactive compound synthesizing means used may be, for example, a known automatic synthesizer.

It is preferred that the radioactive compound (I) synthesized by the radioactive compound synthesizing means be introduced into the sample separating means including a capillary (I) filled with a stationary phase.

It is preferred that the light detecting means (I) be configured to detect Cherenkov light-containing light generated when radiation emitted from the radioactive substance (I) penetrates the solvent (I) and/or a tube wall of the capillary (I).

### [Radioactive substance detection method (I)]

A radioactive substance detection method (I) of the present invention includes the steps of:
retaining a radioactive substance (I) and a solvent (I) inside a capillary (I); and
detecting Cherenkov light-containing light generated when radiation emitted from the radioactive substance (I) penetrates the solvent (I) and/or a tube wall of the capillary (I).

The radioactive substance detection method (I) of the present invention can be implemented, for example, by using the radioactive substance detection device (I) of the present invention.

The following describes a second embodiment of the present invention.

### [Radioactive substance detection device (II)]

The radioactive substance detection device (II) of the present invention is a radioactive substance detection device including a light detecting means, wherein
the radioactive substance contains at least one α-emitting nuclide, and
the light detecting means is configured to detect light generated when an α-ray emitted from the radioactive substance comes into contact with at least one selected from the group consisting of glass, fluorescent indicator F₂₅₄, and fluorescent indicator F_{254S}.

The radioactive substance detection device (II) of the present invention is based on the fact that when an α-ray emitted from a radioactive substance (II) comes into contact with at least one selected from the group consisting of glass, fluorescent indicator F₂₅₄ and fluorescent indicator F_{254S}, light (scintillation light) at such a high intensity (scintillation light) that has not been observed previously is generated.

The wavelength of light generated on the basis of such a phenomenon is, for example, 200 to 900 nm and more preferably 490 to 550 nm.

### <Radioactive substance (II)>

The radioactive substance (II) is an analyte for the detection device (II) of the present invention.

The radioactive substance (II) may be either a single radioactive element or a compound containing a radioactive element. The single radioactive element consists of only one radioactive element, and the compound containing a radioactive element includes a compound consisting of only two or more radioactive elements, a compound consisting of one or more radioactive elements and one or more non-radioactive elements. The radioactive substance (II) may contain two or more radioactive substances, each of which may be either a single radioactive element or a compound containing a radioactive element.

The radioactive substance (II) may be solid, liquid, or gas. If the detection device (II) is equipped with a glass capillary (II) as described below, the radioactive substance (II) is retained inside the capillary.

A radioactive element constituting the radioactive substance (II) is not particularly limited as long as the radioactive element contains at least one α-emitting nuclide. The α-ray is composed of ⁴He nucleus (α-particle) emitted from a radioactive element during α-decay (α-disintegration). The α-ray has low penetrating power and can be shielded by a sheet of paper. On the other hand, the kinetic energy of α-particle is high.

Specific examples of the radioactive element include ¹⁴⁹Tb, ²¹¹At, ²¹²Bi, ²¹²Pb, ²¹³Bi, ²²³Ra, ²²⁴Ra, ²²⁵Ac, ²²⁶Th, ²²⁷Th, and ²³⁰U.
¹⁴⁹Tb and ²¹¹At are transformed to other elements by a decay series consisting of α-decay and orbital electron capture (EC). The decay series to which ¹⁴⁹Tb and ²¹¹At belong does not include β-decay (β disintegration), which emits a charged particle beam. For example, ²¹¹At is converted to a stable element by the following pathways (1) or (2):(1) α-decay causes a change into ²⁰⁷Bi, and ²⁰⁷Bi changes to ²⁰⁷Pb, a stable element, by orbital electron capture; or (2) α-decay causes a change into ²¹¹Po, and ²¹¹Po changes to ²⁰⁷Pb, a stable element, by α-decay.
²¹²Bi, ²¹²Pb, ²¹³Bi, ²²³Ra, ²²⁴Ra, ²²⁵Ac, ²²⁶Th, ²²⁷Th, and ²³⁰U are transformed to other elements by a decay series consisting of α-decay and β-decay that emits a charged particle beam. For example, ²²⁵Ac is sequentially transformed to ²²¹Fr, ²¹⁷At, and ²¹³Bi by α-decay. Then, ²¹³Bi changes to (1) ²⁰⁹Tl by α-decay, and ²⁰⁹Tl changes to ²⁰⁹Pb by β-decay, or (2) ²¹³Po by β-decay, and ²¹³Po changes to ²⁰⁹Pb by α-decay. Subsequently, ²⁰⁹Pb is transformed to a stable element ²⁰⁹Bi by β-decay (β-disintegration).

Table 1 outlines the decay pathways of the following radionuclides.

**[Table 1]**

| Radionuclide | Decay pathway | Half life |
|---|---|---|
| ¹⁴⁹Tb | α-Decay × 1, EC × 3 | 4.118 hours |
| ²¹¹At | α-Decay × 1, EC x 1 | 7.2 hours |
| ²¹²Bi | α-Decay × 1, β-decay × 1 | 60.55 minutes |
| ²¹²Pb | α-Decay × 1, β-decay × 2 | 10.64 hours |
| ²¹³Bi | α-Decay × 1, β-decay × 2 | 45.61 minutes |
| ²²³Ra | α-Decay × 4, β-decay × 2 | 11.43 days |
| ²²⁴Ra | α-Decay × 4, β-decay × 2 | 3.63 days |
| ²²⁵Ac | α-Decay × 4, β-decay × 2 | 9.92 days |
| ²²⁶Th | α-Decay × 5, β-decay × 2 | 30.57 minutes |
| ²²⁷Th | α-Decay into ²²³Ra | 18.7 days |
| ²³⁰U | α-Decay into ²²⁶Th | 20.8 days |

By *The Journal of Nuclear Medicine,* **62**(11), 1495-1503, 2021

Specific examples of the radioactive compound include ²¹¹At-labeled PSMA (Prostate Specific Membrane Antigen) preparation and ²¹¹At-labeled amino acid preparation. Amino acids constituting the ²¹¹At-labeled amino acid preparation include tyrosine and other amino acids constituting a protein.

In the present invention, "radioactive substance detection" means an embodiment in which the presence of the radioactive substance is detected on the basis of, for instance, radiation generated when a radioactive element included in the radioactive substance sequentially changes into other elements by radiation decay.

### <Light detecting means (II)>

The radioactive substance detection device (II) of the present invention includes a light detecting means (II).

The light detecting means (II) is not particularly limited as long as the means can detect light generated when an α-ray emitted from the radioactive substance (II) comes into contact with glass, fluorescent indicator F₂₅₄, or fluorescent indicator F_{254S}.

Examples include charge-coupled device (CCD) cameras, complementary metal oxide semiconductor (CMOS) cameras, photodiodes, photomultiplier tubes, and photographic films. Preferred are CCD or CMOS cameras. Among them, from the viewpoint of sensitivity improvement and noise reduction, more preferred are cooled CCD cameras or cooled CMOS cameras, which are operated at low temperatures. Light may be detected by a CCD or CMOS camera while capturing a visually perceptible image (imaging) or data-processing the value of the electric charge generated in an imaging element.

The detectable wavelength range of the light detecting means (II) is, for example, from 200 to 1000 nm and preferably from 250 to 800 nm.

The exposure time by the light detecting means (II) is, for example, from 0.1 seconds to 10 minutes and preferably from 1 second to 5 minutes.

### <Configuration of detection device (II)>

In the radioactive substance detection device (II) of the present invention, the light detecting means is configured to detect light generated when an α-ray emitted from the radioactive substance comes into contact with at least one selected from the group consisting of glass, fluorescent indicator F₂₅₄, and fluorescent indicator F_{254S}.

### (Glass)

Examples of the glass include soda-lime glass (also called soda glass), borosilicate glass, lead glass, and quartz glass. Among them, from the viewpoint of the present invention, soda-lime glass or borosilicate glass is preferred.

The soda-lime glass refers to glass containing silicon dioxide (SiO₂), sodium oxide (Na₂O), calcium oxide (CaO), and magnesium oxide (MgO) as its main components. The soda-lime glass can contain aluminum oxide (Al₂O₃), iron oxide (Fe₂O₃), titanium dioxide (TiO₂), potassium oxide (K₂O), sulfur trioxide (SO₃), and arsenic oxide (As₂O₃) as impurities.

The borosilicate glass refers to glass containing silicon dioxide (SiO₂), boron trioxide (B₂O₃), aluminum oxide (Al₂O₃), and sodium oxide (Na₂O) as its main components. The borosilicate glass can contain iron oxide (Fe₂O₃), titanium dioxide (TiO₂), zirconium oxide (ZrO₂), potassium oxide (K₂O), and arsenic oxide (As₂O₃) as impurities.

The form of the glass is not restricted. Examples include a glass plate, a glass capillary, and glass beads.

### (Fluorescent indicator)

The fluorescent indicator F₂₅₄ is known as manganese activated zinc silicate (CAS No: 68611-47-2).

The fluorescent indicator F_{254S} is known as an acid-stable alkaline earth tungstate.

The fluorescent indicator F₂₅₄ and fluorescent indicator F_{254S} can be obtained as commercially available products, for example.

The positional relationship between the radioactive substance (II) and the detecting means is not particularly limited. From the viewpoint of efficient light detection, for example, they are arranged so that the distance is 50 to 5000 mm and preferably 50 to 4500 mm.

Since an α-ray has a short range, the distance between the radioactive substance (II) and at least one selected from the group consisting of glass, fluorescent indicator F₂₅₄, and fluorescent indicator F_{254S} is, for example, 0 mm or more, and preferably 5 mm or less, more preferably 2 mm or less, still more preferably 1 mm or less, still more preferably 0.1 mm or less, and still more preferably 0.01 mm or less. The space between the radioactive substance (II) and at least one selected from the group consisting of glass, fluorescent indicator F₂₅₄, and fluorescent indicator F_{254S} has substantially no other substances.

The radioactive substance (II) and the light detecting means (II) are placed in a space where the light from outside is blocked from the viewpoint of efficient light detection. Specifically, the detection device (II) of the present invention may be located in a dark room, or the detection device (II) of the present invention may be equipped with a chamber in which external light can be blocked, and the radioactive substance (II) and the light detecting means (II) may be housed inside the chamber.

The fluorescent indicator F₂₅₄ and the fluorescent indicator F_{254S} emit light (scintillation light) when they come into contact with and charged particle beam (β-ray) emitted by β-decay. The radioactive substance (II), namely an analyte for the detection device (II) of the present invention, may contain a radioactive element that is transformed into other elements by a decay series consisting of α-decay and β-decay emitting a charged particle beam. In this case, scintillation light due to β-ray, in addition to scintillation light due to α-ray generated when the α-ray comes into contact with fluorescent indicator F₂₅₄ or fluorescent indicator F_{254S}, is generated. Therefore, it is possible to detect the combined light, and the detection sensitivity is higher.

### <Preferred embodiment ((II)-1)>

The radioactive substance detection device (II) according to a preferred embodiment of the present invention further includes a glass capillary (II) configured such that a sample containing the radioactive substance (II) moves, together with a solvent, through the capillary, wherein
the light detecting means is configured to detect light containing light generated when an α-ray emitted from the radioactive substance (II) comes into contact with the glass capillary (II).

### (Glass capillary (II)

The shape of the capillary (II) is not limited. For example, the glass capillary (II) has an overlapping shape such as a loop shape.

The cross-section is, for example, approximately circular or oval. In addition, the diameter of the cross-section is, for example, 1 to 10 mm and preferably 1 to 2 mm.

The wall thickness of the glass capillary (II) is, for example, 100 to 2000 µm and preferably 200 to 400 µm.

The glass capillary (II) should have an opening at least one end to allow for introduction and extraction of the radioactive substance (II) and the solvent (II). Both ends may have openings. In this case, it is preferable to have another member, such as a stopper, so that the radioactive substance (II) and solvent (II) can be retained inside.

The glass capillary (II) may be fixed to the detection device by a jig.

The glass capillary (II) may exist independently or may be connected to another member configured to introduce and extract the radioactive substance (II) and the solvent (II). The glass capillary is connected to, for example, the outlet side of a column of a high-performance liquid chromatography (HPLC) system.

### <Solvent (II)>

The solvent (II) is not particularly limited as long as the liquid can be used to retain the radioactive substance (II) inside the glass capillary (II).

Examples of the solvent (II) include: water-based aqueous medium; lower alcohol such as methanol, ethanol, and isopropyl alcohol; ethers such as diethyl ether and tetrahydrofuran (THF); organic solvents other than the above, such as chloroform, ethyl acetate, hexane, and acetonitrile; and mixtures of respective solvents.

Examples of the aqueous medium include a buffer such as phosphate buffer, citrate buffer, or acetate buffer.

### <Preferred embodiment ((II)-2)>

The radioactive substance detection device (II) according to another preferred embodiment of the present invention further includes a capillary (II) configured to allow a sample containing the radioactive substance (II) to move, with a solvent (II), through the capillary (II), wherein
at least part of the capillary (II) is filled with a stationary phase containing at least one selected from the group consisting of glass, fluorescent indicator F₂₅₄, and fluorescent indicator F_{254S}, and
the light detecting means (II) is configured to detect light generated when an α-ray emitted from the radioactive substance (II) comes into contact with at least one selected from the group consisting of the glass, fluorescent indicator F₂₅₄, and fluorescent indicator F_{254S}.

### <Capillary (II)>

The capillary (II), which is configured to allow a sample containing the radioactive substance (II) to move, with the solvent (II), through the capillary (II) and is filled with a stationary phase, is a sample separating means. Specific examples of the embodiment include a capillary column and capillary TLC. The capillary TLC refers to a column filled with a carrier such as silica gel as a stationary phase inside the capillary. Chromatography is possible as for TLC. In addition, by connecting a pump, sample filling can be automated and chromatography can be performed quickly.

The material constituting the tube wall of the capillary (II) is not particularly limited as long as light can penetrate therethrough. Preferably, the material is transparent. However, it is not required to be transparent except for the part emitting light toward the light detecting means, which may be light-shielded.

Specific examples of the material constituting the capillary (II) include glass, polypropylene, polyethylene, polystyrene, and polyvinyltoluene. Glass is preferred from the viewpoint of high resistance to various solvents including organic solvents.

The shape of the capillary (II) is not limited.

The cross-section is, for example, approximately circular or oval. In addition, the diameter of the cross-section is, for example, 1 to 10 mm and preferably 1 to 2 mm.

The wall thickness of the capillary (II) is, for example, 100 to 2000 µm and preferably 200 to 400 µm.

The capillary (II) should have an opening at least one end to allow for introduction and extraction of the radioactive substance (II) and the solvent. Both ends may have openings. In this case, it is preferable to have another member, such as a stopper, so that the radioactive substance and the solvent can be retained inside.

The capillary (II) may be fixed to the detection device by a jig.

The capillary (II) may exist independently or may be connected to another member configured to introduce and extract the radioactive substance and the solvent.

The method using a capillary (II) has an advantage over other methods, such as TLC, in placing the radioactive substance detection device integrated with or in conjunction with the synthesizer. In addition, the risk of sample loss or contamination is minimized by the ability to prevent solvent and solute volatilization.

The stationary phase filled in the capillary (II) is not limited to glass, fluorescent indicator F₂₅₄, and fluorescent indicator F_{254S}, but any substance that functions as a scintillator for α-rays can be suitably used. Specifically, inorganic scintillators (e.g., sintered fluorescent materials activated with various metals such as silver (Ag), copper (Cu), cerium (Ce), niobium (Nb), europium (Eu), chromium (Cr), praseodymium (Pr), or terbium (Tb)), and organic scintillators (e.g., anthracene and stilbene) can be used.

### (Stationary phase (II))

Examples of the glass-containing stationary phase include glass beads.

Examples of the stationary phase containing at least one selected from the group consisting of fluorescent indicator F₂₅₄ and fluorescent indicator F_{254S} include silica gel containing fluorescent indicator F₂₅₄ and/or fluorescent indicator F_{254S}.

### <Solvent (II)>

The solvent (II) used may be the solvents (II) listed in the section "Preferred embodiment ((II)-1)".

### <Preferred embodiment ((II)-(2'))>

The radioactive substance detection device (II) of still another preferred embodiment of the above preferred embodiment (II)-(2) of the present invention is configured such that the radioactive substance (II) further includes at least one nuclide that emits a charged particle beam due to β-decay, and is configured to further detect Cherenkov light-containing light generated when radiation emitted from the nuclide that emits a charged particle beam due to the β-decay penetrates either the solvent, the stationary phase, or a tube wall of the capillary.

The nuclide that emits a charged particle beam from the radioactive substance (II) by β-decay is derived from a radioactive element, such as ²¹²Bi, ²¹²Pb, ²¹³Bi, ²²³Ra, ²²⁴Ra, ²²⁵Ac, ²²⁶Th, ²²⁷Th, or ²³⁰U, which are transformed into other elements by a decay series consisting of α-decay and β-decay that emits a charged particle beam.

For the nuclides that emit a charged particle beam due to β-decay, Cherenkov light is generated when radiation emitted from the radioactive substance penetrates either the solvent, the stationary phase, or the tube wall of the capillary, as shown in the Reference Example described below.

Therefore, by further detecting the Cherenkov light-containing light, the radioactive substance detection device (II) of the present invention can achieve even higher detection sensitivity.

In addition, a β-emitting nuclide different from those produced by the decay of α-emitting nuclide, namely an analyte of the present invention, may be included in the sample as a secondary analyte. In this case, the β-emitting nuclide can be detected using the above Cherenkov light and/or the light (scintillation light) generated when it comes into contact with the fluorescent indicator F₂₅₄ and/or the fluorescent indicator F_{254S}.

The above Cherenkov light is also absorbed by a fluorescent substance such as fluorescent indicator F₂₅₄, and can be detected as fluorescence emitted by the fluorescent substance.

### [Radioactive compound synthesizer (II)]

The radioactive compound synthesizer of the present invention includes:
a means (II) for synthesizing a radioactive compound containing at least one α-emitting nuclide;
a sample separating means (II) including a capillary (II) filled with a stationary phase; and
a light detecting means (I), wherein
the sample separating means (II) is configured such that a sample and a solvent (II)-containing mobile phase move through the stationary phase to separate the sample,
the sample includes at least a portion of the radioactive compound (II) synthesized by the synthesizing means, and
the light detecting means (II) is configured to detect light generated when an α-ray emitted from the radioactive compound (II) comes into contact with at least one selected from the group consisting of glass, fluorescent indicator F₂₅₄, and fluorescent indicator F_{254S}.

As the sample separating means including a capillary filled with a stationary phase and the light detecting means (II), those described in "Radioactive substance detection device (II)" may be used.

The radioactive compound synthesizing means (II) used may be, for example, a known automatic synthesizer.

It is preferred that the radioactive compound (II) synthesized by the radioactive compound synthesizing means be introduced into the sample separating means including a capillary (II) filled with a stationary phase.

It is preferable to detect light generated when an α-ray emitted from the radioactive compound (II) synthesized comes into contact with at least one selected from the group consisting of glass, fluorescent indicator F₂₅₄, and fluorescent indicator F_{254S}.

### [Radioactive substance detection method (II)]

The radioactive substance detection method (II) of the present invention includes the step of detecting light generated when an α-ray emitted from a radioactive substance (II) comes into contact with at least one selected from the group consisting of glass, fluorescent indicator F₂₅₄, and fluorescent indicator F_{254S}.

The radioactive substance detection method (II) of the present invention can be implemented, for example, by using the radioactive substance detection device (II) of the present invention.

### Examples

The following specifically describes the present invention by using Examples and Reference Example. The Examples and Reference Example are merely illustrative of the present invention and do not limit the scope of the present invention in any way.

### (Materials, etc.)

Aqueous solutions of [¹⁸F]F⁻ and [¹⁸F]FDG were provided by the Department of Radiology, Chiba University Hospital. The 50 mM Tricine (pH 7.6) solution containing [³²P]ATP was purchased from the Japan Radioisotope Association.

As a compound labeled with [²¹¹At], ²¹¹At-labeled PMSA (Prostate Specific Membrane Antigen) was produced according to the description of WO2019/151384.

To measure radioactivity of [¹⁸F] and [³²P], a RADIOISOTOPE CALIBRATOR CRC-127R manufactured by CAPINTEC was used, [²¹¹At] was measured by using a CURIEMETER IGC-2 manufactured by ALOKA Co., Ltd. or TLC analyzer-miniGITA manufactured by Elysia-raytest.

TLC aluminum sheet silica gel 60 (F₂₅₄(-)), TLC aluminum sheet silica gel 60 F254 (F₂₅₄(+)), and TLC aluminum sheet silica gel 60 C18 F_{254S} (F_{254S}(+)) were purchased from Merck.

The capillary column used was a Radio-Cap manufactured by FutureChem Chemicals.

The plastic scintillator used was BC-400 (Reference Example 1 and Example 1: 250 µm thickness; Examples 2 to 6: 11 µm thickness) manufactured by Saint-Gobain Crystals.

The capillary column (CP-C) filled with F₂₅₄(-) silica gel was a Radio-Cap manufactured by FutureChem Chemicals. For CP-C filled with F₂₅₄(+) silica gel, the above Radio-Cap was refilled with F₂₅₄(+) silica gel.

Anthracene was purchased from Nacalai Tesque.

Soda glass sheets, lead glass sheets, borosilicate glass sheets, and quartz sheets were purchased from Cosmos Bead Co., Ltd.

The organic solvents used in the experiments were purchased from FUJIFILM Wako Pure Chemical Corporation.

Luminescent images were captured using a cooled CMOS camera (product model: CS-702M) manufactured by BITRAN CORPORATION and an OLYMPUS G. ZUIKO AUTOS manufactured by Olympus Corporation.

Signal-to-background ratios were calculated using ImageJ software (obtained from the National Institutes of Health).

### Reference Example 1: To detect light of radionuclide by using TLC

Aqueous solutions (0-370 kBq) containing ¹⁸F or ³²P were applied onto TLC plates F₂₅₄(-) and F₂₅₄(+), which were imaged using a camera (exposure time: 5 minutes; f value: 1.4).

An plastic scintillator for radiation measurement or glass plate was placed on the TLC plates and an image was captured under the same conditions.

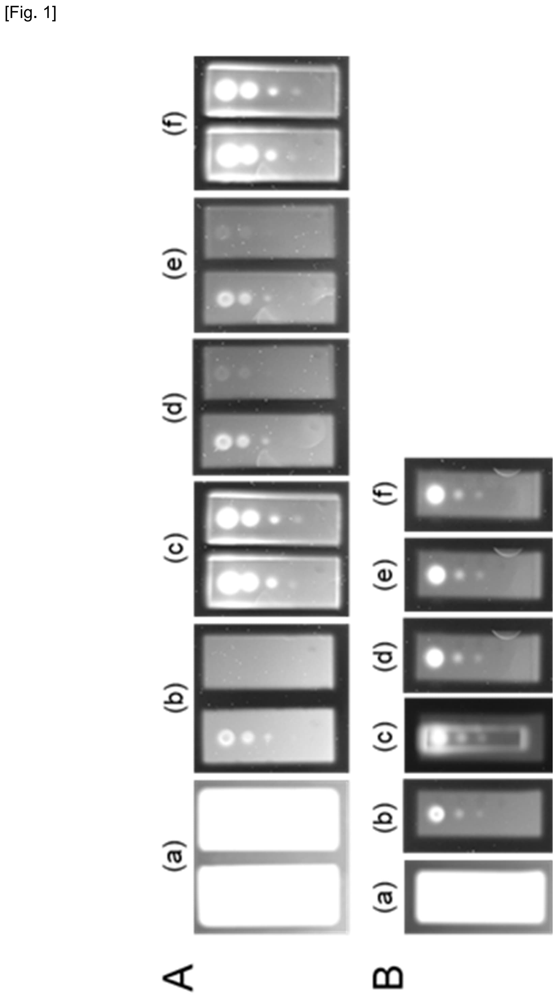

The results are shown in Fig. 1.

In Fig. 1A, the left plate is F₂₅₄(+) and the right plate is F₂₅₄(-). (a) Bright-field image of a TLC plate to which ¹⁸F was applied.
(b) Luminescent image of each TLC plate to which ¹⁸F was applied.
(c) Luminescent image when a plastic scintillator was overlaid on each TLC plate to which ¹⁸F was applied.
(d) Luminescent image when a glass plate was overlaid on each TLC plate to which ¹⁸F was applied.
(e) Luminescent image when a glass plate and a plastic scintillator were overlaid in this order on each TLC plate to which ¹⁸F was applied.
(f) Luminescent image when a plastic scintillator and a glass plate were overlaid in this order on each TLC plate to which ¹⁸F was applied.

In Fig. 1B, each plate is an F₂₅₄(+) TLC plate.
(a) Bright field image of a TLC plate to which ³²P was applied.
(b) Luminescent image of a TLC plate to which ³²P was applied.
(c) Luminescent image when a plastic scintillator was overlaid on a TLC plate to which ³²P was applied.
(d) Luminescent image when a glass plate was overlaid on a TLC plate to which ³²P was applied.
(e) Luminescent image when a glass plate and a plastic scintillator were overlaid in this order on a TLC plate to which ³²P was applied.
(f) Luminescent image when a plastic scintillator and a glass plate were overlaid in this order on a TLC plate to which ³²P was applied.

It was demonstrated that the interaction of radiation with F₂₅₄, glass, and plastic scintillator increased the detected light intensity more than the interaction of radiation with silica gel alone.

### Example 1: To detect light of radionuclide by using capillary column (CP-C)

A capillary column (CP-C) filled with silica gel (F₂₅₄(-) or F₂₅₄(+)) was charged with an aqueous solution (370 kBq) containing ¹⁸F or ³²P, and the images were captured using a camera (exposure time: 1 to 5 minutes; f value: 1.4).

CP-C filled with silica gel mixed with anthracene (powdered optical wavelength shifter), plastic scintillator for radiation measurement, and optical fiber was charged with a solution containing ³²P and imaged under the same conditions (exposure time: 1 minute).

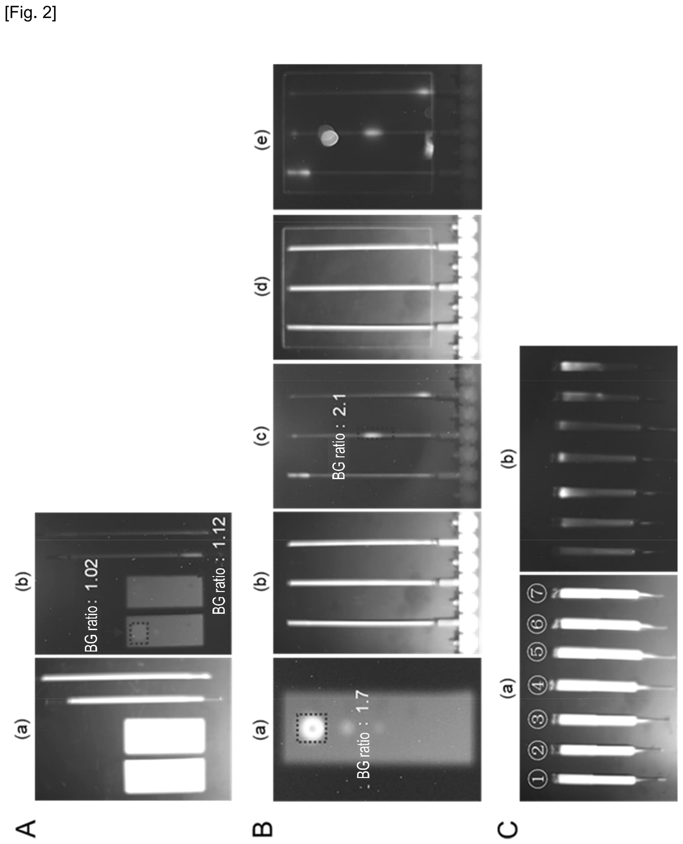

The results are shown in Fig. 2.

In Fig. 2A, the left plate is F₂₅₄(+) and the right plate is F₂₅₄(-). The left CP-C is filled with F₂₅₄(+) silica gel, and the right CP-C is filled with F₂₅₄(-) silica gel.

Fig. 2A(a) Bright field images of TLC plates and CP-Cs with ¹⁸F as a sample.

Fig. 2A(b) Luminescent images of TLC plates and CP-Cs with ¹⁸F as a sample.

Fig. 2B(a) Luminescent image of F₂₅₄(+) TLC plate to which ³²P was applied.

Fig. 2B(b) Bright-field image of F₂₅₄(-)CP-Cs charged with ³²P.

Fig. 2B(c) Luminescent image of F₂₅₄(-)CP-Cs charged with ³²P.

Fig. 2B(d) Bright-field image when a plastic scintillator was placed on F₂₅₄(-)CP-Cs charged with ³²P.

Fig. 2B(e) Luminescent image when a plastic scintillator was placed on F₂₅₄(-)CP-Cs charged with ³²P.

In Fig. 2C, each CP-C is as follows
1: F₂₅₄(-)CP-C, non-radioactive material
2: F₂₅₄(-) silica gel CP-C
3: F₂₅₄(-) silica gel + anthracene CP-C
4: F₂₅₄(-) silica gel + powdered plastic scintillator CP-C
5: F₂₅₄(-) silica gel + powdered optical fiber CP-C
6: F₂₅₄(-) silica gel + anthracene + powdered plastic scintillator CP-C
7: F₂₅₄(-) silica gel + anthracene + powdered optical fiber CP-C

Fig. 2C(a) Bright-field image of various CP-Cs charged with ³²P.

Fig. 2C(b) Luminescent image of various CP-Cs charged with ³²P.

The light intensity ratio of each radionuclide charged into CP-Cs was higher than that of each radionuclide applied to TLC plates, and the detection sensitivity was improved. Since CP-C is a cylindrical tube filled with silica gel in a three-dimensional configuration, it is considered that the Cherenkov light produced is stronger because of the strong interaction with the radiation emitted in the 4π geometry direction. On the other hand, since the TLC plate has a planar structure, the interaction between radiation and silica gel may be smaller than that of CP-C. Further, TLC plates are imaged in a dry state, while sample and development solvents remain in CP-C. Therefore, the interaction with these solutions can generate Cherenkov light, which may also be a reason for the increase in light intensity. In the detection of light from each radionuclide by using CP-C, the signal-to-background ratio (BG ratio in the figure) was 1.1 to 1.2 times higher than that using TLC plates.

In addition, investigated was the use of CP-C including anthracene as an organic optical wavelength shifter, plastic scintillators for radiation measurement, and optical fibers. The results have demonstrated that combination of these can improve the detection sensitivity by converting the Cherenkov light generated into light in the wavelength region that is easy to detect.

### Example 2: To detect light of α-emitting nuclide by using TLC

Solutions (0 to 370 kBq) containing and ²¹¹At-labeled compound were applied onto TLC plates F₂₅₄(-) and F₂₅₄(+), which were imaged using a camera (exposure time: 1 minute; f value: 1.4). The distance between the TLC plate and the camera was 45 cm.

A plastic scintillator for radiation measurement and/or a glass plate was placed on each TLC plate and an image was captured under the same conditions.

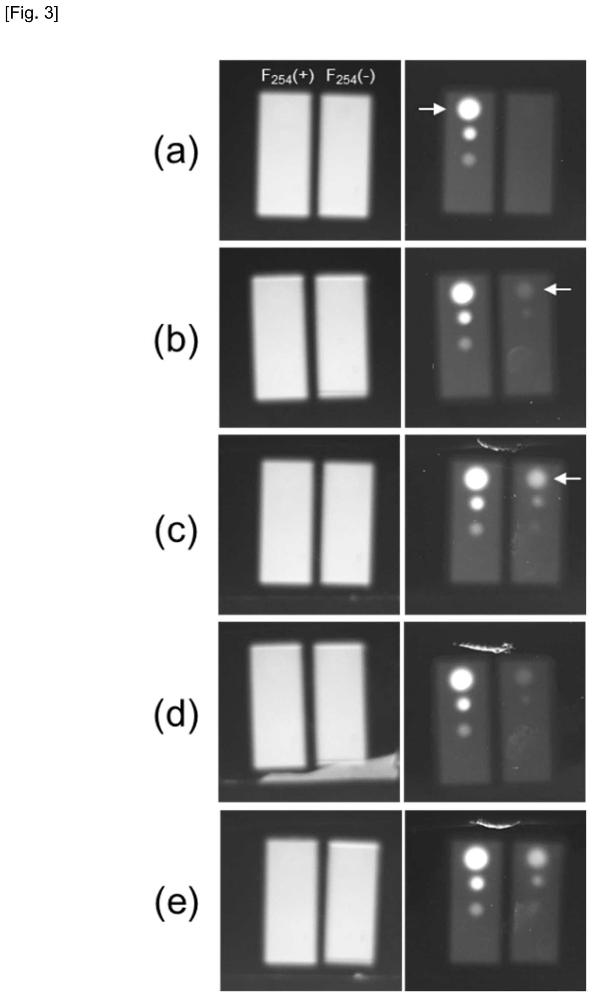

The results are shown in Fig. 3. In the figure, the left plates are F₂₅₄(+) and the right plates are F₂₅₄(-).
(a) Bright-field image (left panel, same as below) and luminescent image (right panel, same as below) of TLC plates to which ²¹¹At was applied (left panel, same as below).
(d) Bright field image and luminescent image when a soda glass plate was overlaid on TLC plates to which ²¹¹At was applied.
(c) Bright field image and luminescent image when a plastic scintillator was overlaid on TLC plates to which ²¹¹At was applied.
(d) Bright field image and luminescent image when a soda glass plate and a plastic scintillator were overlaid in this order on TLC plates to which ²¹¹At was applied.
(e) Bright field image and luminescent image when a plastic scintillator and a soda glass plate were overlaid in this order on TLC plates to which ²¹¹At was applied.

The light intensity detected from the spot position of ²¹¹At differed depending on the presence or absence of F₂₅₄ in the TLC plate (arrows in the figure). This suggests that F₂₅₄ emits light when α-rays emitted from ²¹¹At come into contact with F₂₅₄, and that F₂₅₄ functions as a scintillator for ²¹¹At (Fig. 3(a)). Hereafter, a substance that has a function of emitting light upon contact with α-rays emitted from ²¹¹At is referred to as a "scintillator" and the effect of such light emission is referred to as "scintillation".

A glass plate was overlaid on the TLC plate to detect light from ²¹¹At spotted on the F₂₅₄(-) TLC plate (the arrow in the figure). This suggests that the glass plate also functions as a scintillator for ²¹¹At (Fig. 3(b)).

When a plastic scintillator was overlaid on the TLC plate, light from ²¹¹At spotted on the F₂₅₄(-) TLC plate was detected, but had lower light intensity than the ²¹¹At sample applied on the F₂₅₄(+) TLC plate in Fig. 3(a) (the arrows in the figure). This suggests that the scintillation effect of F₂₅₄ is larger (Fig. 3(c)).

On the other hand, the TLC plate is imaged by placing a glass plate and a plastic scintillator on the TLC plate in two different overlaying orders. The scintillation effect of the first overlaid medium layer was observed, but the scintillation effect of the second overlaid medium layer of media was not observed (Figs. 3(b)-(e)). In other words, among the α-rays and X-rays emitted by the α-decay of ²¹¹At, the scintillation effect due to the interaction with the medium by the long range X-rays is small, suggesting that the scintillation light generated by the interaction with the short range α-rays is mainly detected.

### Example 3: Comparison of glass type-dependent scintillation effects of α-emitting nuclide

Solutions (0 to 370 kBq) containing a ²¹¹At-labeled compound were applied onto TLC plates F₂₅₄(-), which were imaged using a camera (exposure time: 1 minute; f value: 1.4). The distance between the TLC plate and the camera was 45 cm. Various glass plates were each placed on the TLC plate on the right side and an image was captured under the same conditions.

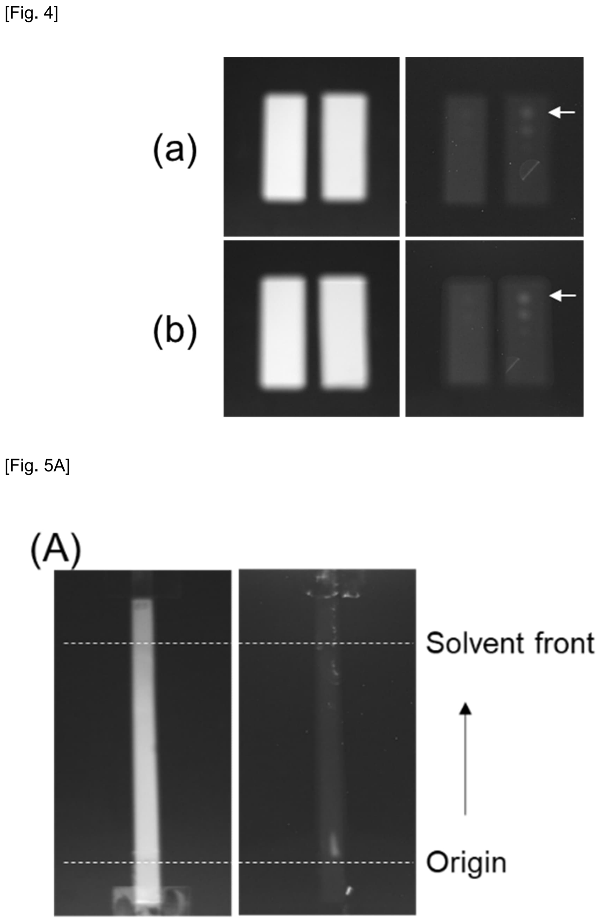

The results are shown in Fig. 4.
(a) Bright field image and luminescent image when a soda glass was placed on the TLC plate on the right side.
(b) Bright field image and luminescent image when a borosilicate glass was placed on the TLC plate on the right side.

A soda glass or borosilicate glass was overlaid. As a result, light from ²¹¹At spotted on the F₂₅₄(-) TLC plate was detected (Fig. 4(a) and (b); the arrows in the figure).

The signal-to-background ratios in Examples 2 and 3 are shown in Table 2. The signal-to-background ratios of light intensity in the table are measured using 37 kBq samples.

**[Table 2]**

| | TLC F₂₅₄(-) | TLC F₂₅₄(+) | TLC F₂₅₄(-) | | | | |
|---|---|---|---|---|---|---|---|
| | - | - | Soda glass | Borosilicate glass | Plastic scintillator | Soda glass | Plastic scintillator |
| | - | - | - | - | - | Plastic scintillator | Soda glass |
| Signal-background ratio | n.d. | 3.98 | 1.04 | 1.11 | 1.22 | 1.02 | 1.23 |

### Example 4: To detect light of α-emitting nuclide after TLC development.

A solution (26 kBq) containing a ²¹¹At-labeled compound was applied onto a TLC plate F₂₅₄(+), and developed with a solvent (1% Na ascorbate-containing H₂O/MeCN = 1/1). The plate was then imaged using a camera (exposure time: 1 minute; f value: 1.4). The distance between the TLC plate and the camera was 45 cm. Here, the radioactivity was measured by a TLC analyzer miniGITA (measurement time: 1 minute).

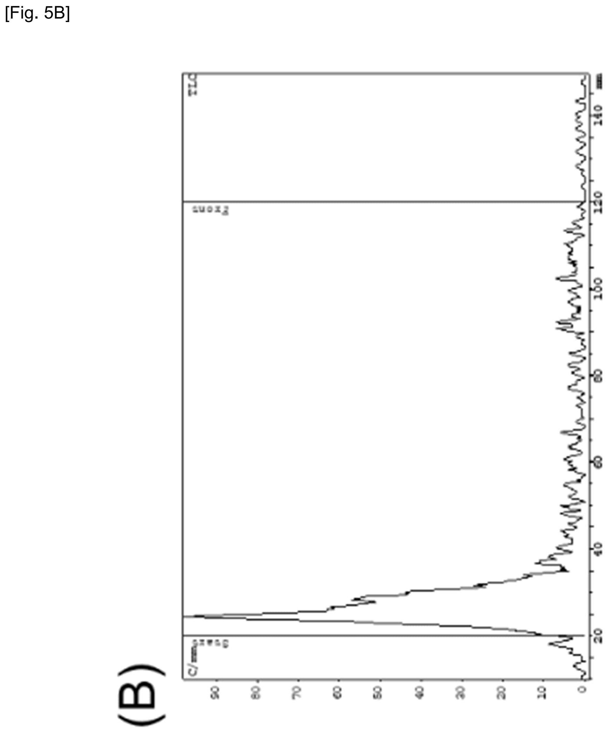

The results are shown in Figs. 5A and 5B.

Fig. 5A:(A) Bright-field image and luminescent image of a ²¹¹At-labeled compound analyzed on a reversed-phase TLC plate.

In the figure, Origin and Solvent front are indicated by dotted lines.

Fig. 5B:(B) Chromatograph of a TLC plate subjected to radioactivity detection by a TLC analyzer.

The ²¹¹At-labeled compound was applied to an F_{254S}(+) revers-phase TLC plate, and after solvent development, a luminescent spot was observed at Rf values between 0.05 and 0.1 when imaged with a high-sensitivity camera (Fig. 5(A)). From these results, it has been demonstrated that not only F₂₅₄ but also F_{254S} can function as a scintillator for ²¹¹At.

In addition, the radioactivity detection of the same TLC plate showed that the high radioactivity was detected at Rf values between 0.05 and 0.1. Thus, the results in the case of luminescence detection are consistent with those of the case of radioactivity detection.

### Example 5: To detect light of α-emitting nuclide by using capillary column

A capillary column (CP-C) filled with silica gel (F₂₅₄(-) or F₂₅₄(+)) was charged with a solution (370 kBq) containing a ²¹¹At-labeled compound, and the images were captured using a camera (exposure time: 1 minute; f value: 1.4).

The case of using a TLC plate under substantially the same conditions was compared.

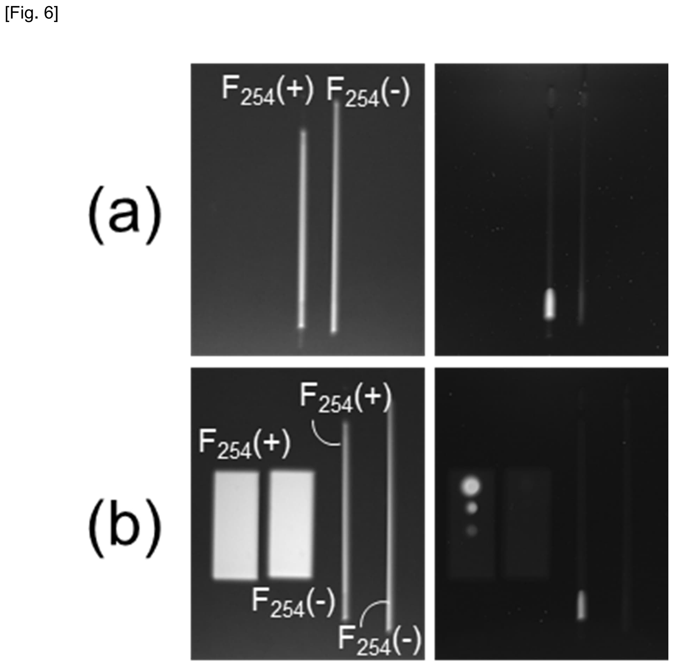

The results are shown in Fig. 6.
(a) Bright-field image and luminescent image of a ²¹¹At-labeled compound applied to CP-C. The left CP-C is filled with F₂₅₄(+) silica gel, and the right CP-C is filled with F₂₅₄(-) silica gel.
(b) Bright-field image and luminescent image when light from a ²¹¹At-labeled compound-containing solution applied to TLC or CP-C was detected. The left plate is F₂₅₄(+) and the right plate is F₂₅₄(-). The left CP-C is filled with F₂₅₄(+) silica gel, and the right CP-C is filled with F₂₅₄(-) silica gel.

In CP-C, the luminescent intensity was observed to be comparable to that of TLC.

### Example 6: To quantitatively evaluate detection of light from α-emitting nuclide

Solutions (0 to 37 kBq) containing a ²¹¹At-labeled compound were applied onto TLC plates F₂₅₄(+), which were imaged using a camera (exposure time: 1 minute; f value: 1.4). The distance between the TLC plate and the camera was 45 cm. Signal-to-background ratios were analyzed using ImageJ software.

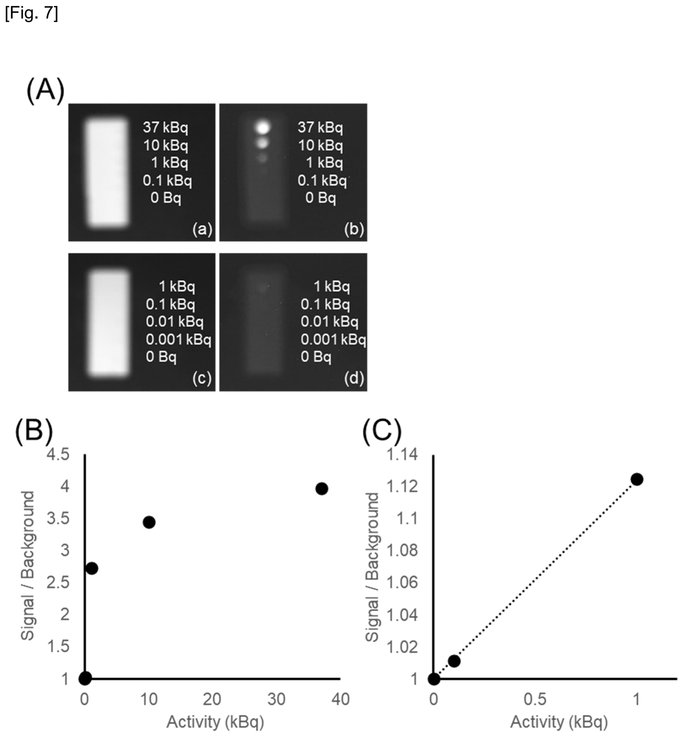

The results are shown in Fig. 7.
(a) Bright field image and luminescent image of each F₂₅₄(+) TLC plate to which ²¹¹At was applied.
(A-a), (A-b) 0 to 37 kBq dilution series were applied. The dilution series were 37 kBq, 10 kBq, 1 kBq, 0.1 kBq, and 0 Bq.
(A-c), (A-d) 0 to 1 kBq dilution series were applied. The dilution series were 1 kBq, 0.1 kBq, 0.01 kBq, 0.001 kBq, and 0 Bq.
(B) The graph is prepared by plotting radioactivity (Activity(kBq)) versus signal-to-background ratio (Signal/Background) for the dilution series from 0 to 37 kBq.
(C) The graph is prepared by plotting radioactivity (Activity(kBq)) versus signal-to-background ratio (Signal/Background) for the dilution series from 0 to 1 kBq.

The above results indicate that the quantitativeness was observed in the range of at least 0 to 1 kBq under the above imaging conditions.

## Claims

1. A radioactive substance detection device comprising:
a capillary for retaining a radioactive substance and a solvent inside the capillary; and
a light detecting means, wherein
the light detecting means is configured to detect Cherenkov light-containing light generated when radiation emitted from the radioactive substance penetrates the solvent and/or a tube wall of the capillary.

2. The detection device according to claim 1, wherein a material constituting the capillary is selected from the group consisting of glass, polypropylene, polyethylene, polystyrene, and polyvinyltoluene.

3. The detection device according to claim 1, wherein the radioactive substance comprises at least one nuclide that emits a charged particle beam due to β-decay.

4. The detection device according to claim 3, wherein the nuclide is at least one selected from the group consisting of ¹¹C, ¹³N, ¹⁵O, ¹⁸F, ³²P, ⁶⁴Cu, ⁶⁸Ga, ⁸⁹Zr, ⁹⁰Y, ¹²⁴I, ¹³¹I, ¹⁷⁷Lu, ²⁰⁹Ti, ²⁰⁹Pb, and ²¹³Bi.

5. The detection device according to claim 1, further comprising a means for converting a wavelength of the Cherenkov light.

6. The detection device according to claim 1, wherein the light detecting means further detects scintillation light of the radioactive substance.

7. The detection device according to claim 1, wherein at least part of the capillary is filled with a stationary phase, the device comprising a sample separating means configured such that a sample containing the radioactive substance and a mobile phase containing the solvent move through the stationary phase to separate the sample.

8. The detection device according to claim 7, wherein radiation emitted from the radioactive substance causes Cherenkov light to be generated when the radiation penetrates the stationary phase.

9. The detection device according to claim 7, wherein the stationary phase is selected from the group consisting of silica gel, surface-treated silica gel, ion exchange resins, porous crosslinked gel, and carriers having an affinity moiety to an analyte.

10. A radioactive compound synthesizer comprising
a radioactive compound synthesizing means;
a sample separating means comprising a capillary filled with a stationary phase; and
a light detecting means, wherein
the sample separating means is configured such that a sample and a solvent-containing mobile phase move through the stationary phase to separate the sample,
the sample comprises at least a portion of the radioactive compound synthesized by the synthesizing means, and
the light detecting means is configured to detect Cherenkov light-containing light originating from radiation emitted from the radioactive compound.

11. A radioactive substance detection method comprising the steps of:
retaining a radioactive substance and a solvent inside a capillary; and
detecting Cherenkov light-containing light generated when radiation emitted from the radioactive substance penetrates the solvent and/or a tube wall of the capillary.

12. A radioactive substance detection device comprising a light detecting means, wherein
the radioactive substance comprises at least one α-emitting nuclide, and
the light detecting means is configured to detect light generated when an α-ray emitted from the radioactive substance comes into contact with at least one selected from the group consisting of glass, fluorescent indicator F₂₅₄, and fluorescent indicator F_{254S}.

13. The detection device according to claim 12, wherein the α-emitting nuclide is at least one selected from the group consisting of ¹⁴⁹Tb, ²¹¹At, ²¹²Bi, ²¹²Pb, ²¹³Bi, ²²³Ra, ²²⁴Ra, ²²⁵Ac, ²²⁶Th, ²²⁷Th, and ²³⁰U.

14. The detection device according to claim 12, further comprising a glass capillary configured to allow a sample containing the radioactive substance to move, with a solvent, through the capillary, wherein
the light detecting means is configured to detect light containing light generated when an α-ray emitted from the radioactive substance comes into contact with the glass capillary.

15. The detection device according to claim 12, further comprising a capillary configured to allow a sample containing the radioactive substance to move, with a solvent, through the capillary, wherein
at least part of the capillary is filled with a stationary phase containing at least one selected from the group consisting of glass, fluorescent indicator F₂₅₄, and fluorescent indicator F_{254S}, and
the light detecting means is configured to detect light generated when an α-ray emitted from the radioactive substance comes into contact with at least one of the glass, fluorescent indicator F₂₅₄, and fluorescent indicator F_{254S}.

16. The detection device according to claim 15, wherein the radioactive substance further comprises at least one nuclide that emits a charged particle beam due to β-decay, and the device is configured to further detect Cherenkov light-containing light generated when radiation emitted from the nuclide that emits a charged particle beam due to the β-decay penetrates either the solvent, the stationary phase, or a tube wall of the capillary.

17. A radioactive substance detection method comprising the step of detecting light generated when an α-ray emitted from a radioactive substance comes into contact with at least one selected from the group consisting of glass, fluorescent indicator F₂₅₄, and fluorescent indicator F_{254S}.
